# EUROPEAN PATENT APPLICATION

(11) **EP 2 866 416 A1**
(43) Date of publication of application: **29.04.2015**
(21) Application number: 13306469.1
(22) Date of filing: 24.10.2013
(51) Int. Cl.: H04L 29/08, H04L 29/06, H04W 84/18

(54) **Control of the use of data received from a device via a network**

(71) Applicant: NEC Corporation, Minato-ku, Tokyo 108-8001 (JP)
(72) Inventor: Beaugrand, Fabrice, 92500 Rueil Malmaison (FR)
(74) Representative: Cabinet Plasseraud

(57) **Abstract**

The invention aims at the control of the use of data received from a first device (D1), said control being implemented by computing means of a second device (D2) connected to the first device via a network, and comprising the steps:
- obtaining (S3) connection data of the first device, giving an information as to whether the first device is still connected or disconnected from the network,
- on the basis of the connection data, detecting (S6) whether the first device is still connected or disconnected to the second device via the network, and
- if the first device is detected as being disconnected from the network, then said data are prevented (S8) from being used on the second device.

## Description

The present invention relates to communications between devices, via a network to which the devices are connected. The network can be a local network, optionally but not necessarily.

The words "local network" aim at any short range communication network, for example through a radiofrequency link such as Wi-Fi, Bluetooth, etc., or through a wired link. The link can be a direct link between two devices only. In a variant, the network can connect more than two devices together. The devices can be for example mobile phones, smartphones, tablets, computers (laptops or fix computers), etc.

More particularly, devices connected to a network can share and/or synchronize between them contents data, such as multimedia contents (e.g. pictures, video, music, etc.), or work contents (e.g. text documents, data in tabular form issued from a spreadsheet, presentation slide data, etc.).

Such a sharing and/or synchronization can aim also at applications running on devices which are connected through the aforesaid network. In fact, some applications can offer a possibility to transfer the use and the running of the application from a device to another one.

However, that leads to some usage issues. In fact, temporary licenses can be generated to let the user that receives an application through the network to try it, but not to use it forever and for free.

It is wished thus to push an application to other users' devices, for example thanks to instant sharing with devices of users connected to a sharing group (defined by the devices simultaneously connected to the network for example in a same session). It is wished that users can use the pushed application as long as they remain connected to the sharing group, but, as soon as the device providing the application leaves the sharing group (e.g. the network), the application cannot be used anymore by the other devices.

It is already known, for instance, that a user of a first device (for example a smartphone) can use an application of that first device and push an application and install that application on a second device (such as tablet for example). In fact, a new application on a mobile device can be installed on a device without accessing to a dedicate centralized application store through the cloud, and can be installed from another device through a local network, thanks to, for example, transfer of Android™ applications between devices via Bluetooth, or thanks to synchronization process proposed by Apple™ systems.

Usually, temporary usage of the application is limited to a period of time, a location or a number of devices. The control of the time limitation is achieved within the application itself (licence) when running on the device. The limitation of use is ensured by the application program itself (even if exchanges are possible between devices wirelessly connected together).

But, on the one hand, if an application is not installed on a device, his user needs to download the application from an application store and a wide area network access is thus mandatory.

On the other hand, although it is now possible to push an application from one device to another, there is no easy technical way to temporary limit the use of the pushed application.

The present invention aims to improve the situation.

To that end, it proposes a method for controlling the use of data received from a first device, said method being implemented by computing means of a second device connected to said first device via a network, said second device comprising a memory for storing said data at least temporarily, wherein the method comprises the steps:
- obtaining connection data of said first device, said connection data giving an information as to whether said first device is still connected or disconnected from the network,
- on the basis of said connection data, detecting whether said first device is still connected or disconnected to the second device via the network, and
- if said first device is detected as being disconnected from the network, then said data are prevented from being used on said second device.

Therefore, thanks to the invention, it is possible for the user of the aforesaid first device to recommend an application or a content (data of which are transmitted through the aforesaid network) to the user of the second device. The first device pushes thus data of the application or the content to the second device, so that the user of the second device can try the application or use the content for a limited period of time. He can test it and buy it for example. Whereas the limitation of use of a content or an application is usually based on time or on a number of devices trying the application or the content, the present invention proposes a limitation related to the presence of the pusher on the network.

According to a first advantage of the invention, it makes the recommendation of the user of the first device more dissuasive for illegally copying the application or the content.

In a possible embodiment, the second device can comprise a memory for storing said data at least temporarily, and therefore, if the first device is detected as being disconnected from the network, then the stored data can simply be deleted from the memory of the second device.

Therefore, thanks to this embodiment, no data (of a content or of an application) can remain on the second device.

In a variant however, for example for an application, the data of the application can remain stored on the second device but not usable, and if the user of the second device pays for the use of the application (for example on a website of the application), then the application can be used again on the second device, independently on whether the first device is connected or not.

In an embodiment, the connection data can comprise at least an address of said first device over the network. That address can be for example:
- an IP address over an extended network (the second device can detect a disconnection of the first device from the network if it has no answer to interrogation messages sent to the IP address of the first device after a predetermined time threshold, for example);
- a MAC address and/or an IP address over a local network (for example an ad-hoc network with one device playing the role of an access point; or a local network initiated thanks to a predetermined hotspot).

In an embodiment, the aforesaid network is a local wireless network.

In fact, a data communication through a local network can prevent from connection issues and bad places to download data from an extend network such as the Internet. Moreover, as the local network has a short range, users of the connected devices can see each other and typically the user of the second device is dissuaded from making an illegal copy of the content or the application on his device.

In the embodiment where the network is a local network, the aforesaid connection data (for example the MAC address of the first device) can easily be obtained from a device connected to the network and acting as an access point to the local network. The second device can thus repeatedly interrogate the access point to detect whether the MAC address is still valid (meaning thus that the first device is still being connected).

In fact, in a more particular embodiment, the aforesaid first device can be the access point to the local network and the connection data can be received directly from the first device.

For example, the connection data can be received for the first time along with the data to be used on the second device. That particular embodiment can enhance the security of the process since the first device controls the network as being the access point, and can prevent for example attacks from the second device and a third device acting as the access point. In fact, if the access point leaves the network, any communication is usually simply ended.

In a more general embodiment, the aforesaid data can comprise data of an application which can be installed on the second device upon reception of the aforesaid data on the second device.

More particularly, a detection of disconnection of said first device from the network causes an uninstallation of the application from the second device.

For example, the second device can run an operating system arranged for uninstalling the application upon detection of disconnection of the first device from the network.

In an embodiment where the aforesaid data comprise data of a content, and the second device comprises a memory to store said data, the content can be stored in said memory of the second device upon reception of the data, and a detection of disconnection of the first device from the network can cause therefore a deletion of data of the content from the second device memory.

The present invention aims also at a device for implementing the method according to the invention and comprising, for example, communication means for receiving data from a distant device via a network, and further comprising processing means for, upon detection of disconnection of said distant device from the network, preventing said data from being used on said device.

The present invention aims also at a computer program product, comprising instructions for performing the method according to the invention, when run by processing means.

For example, the computer program can be an add-on to the aforesaid application or to a software player of the aforesaid content, which can request connection data of the first device (as the provider of the application or the content) from an access point for example, and in case of disconnection of the first device, uninstall the application or delete the content.

The present invention is illustrated by way of example, and not by way of limitation, in the figures of the accompanying drawings, in which like reference numerals refer to similar elements and in which:
- Figure 1 shows first and second terminal devices, the first device sending data of an application or a content to the second device;
- Figure 2 is a flow chart including general steps of the method according to an embodiment of the invention;
- Figure 3 shows a plurality of devices, connected to a local area network for sharing an application or a content issued from a first device D1;
- Figure 4 is a flow chart including particular steps of the method according to an embodiment of the invention corresponding to the implementation of Figure 3;
- Figure 5 shows a terminal for performing the method according to an embodiment of the invention.

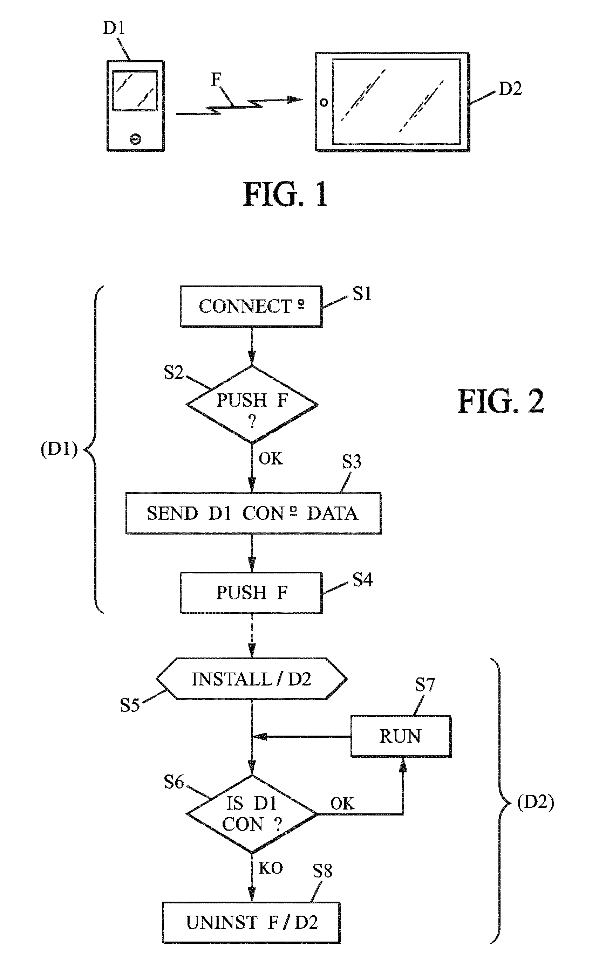

With reference to figure 1, a first device D1 provides data (arrow F) to a second device D2, through a communication link which can be supported by a network. The term "network" encompasses any communication link between at least two devices. The transmitted data can be data of a content to be played or displayed on the second device D2 or data of an application to be run on the second device D2. The terminal devices can be mobile phones, smartphones, tablets, laptops, fixed computers, etc.

In an embodiment hereafter, transmitted data F are data of an application to run on device D2.

Therefore, with reference to figure 2 now, after a first step S1 of connection between devices D1 and D2 of figure 1, and upon acceptation of a request from the second device D2 to push the application at step S2, the first device D1 sends at step S3 the connection data of the first device D1 to the second device D2 (for example an address of device D1 over the network), and pushes then the application data to device D2 at step S4.

At step S5, the application is installed on the second device D2. Upon command of a user of the second device D2, the second device checks first whether the first device is connected or not to the second device D2 at step S6.

If the first device D1 is still connected to the second device D2 (arrow OK at the output of test S6), then the second device D2 can run the application at step S7. Otherwise (arrow KO at the output of test S6 meaning that the first device D1 is disconnected), then the application is uninstalled from the second device D2 at step S8.

In a variant, in step S8, the application can remain installed on the second device D2, but its run can be prevented (interrupted) as long as the first device D1 is disconnected from the second device D2. It will be understood thus that the second device D2 can run the application as long as it is connected to the first device D1.

In another variant nevertheless, the application can remain unusable after the first time that the first device is detected as disconnected, even if the first device connects to the second device later on.

To that end, the second device D2 can receive obtain also (for example from an access point AP in an ad-hoc local area network) an identifier of the communication session. The second device D2 can store that identifier along with the address of the first device D1 over the network (for example its IP address), when installing the application. Therefore, in the test S6, the second device D2 can check whether the address is still valid (e.g. whether the first device D1 is still connected to device D2) and whether the session identifier is still the same as the one previously stored (meaning thus that devices D1 and D2 are still being connected for the first time since the installation of the application). Therefore, if a communication session between the first D1 and second D2 devices is changed, then data received from the first device D1 are prevented from being used on the second device D2.

It is to be understood thus said "connection data" of the first device D1 can aim at least one element among the address of the first device D1 and the aforesaid communication session identifier.

In any case, as long as device D1 and device D2 are not connected anymore one to each other, the application cannot run on device D2. The disconnection of device D1 (which is the legal owner of the application) guarantees automatically that the second device D2 cannot run anymore the application.

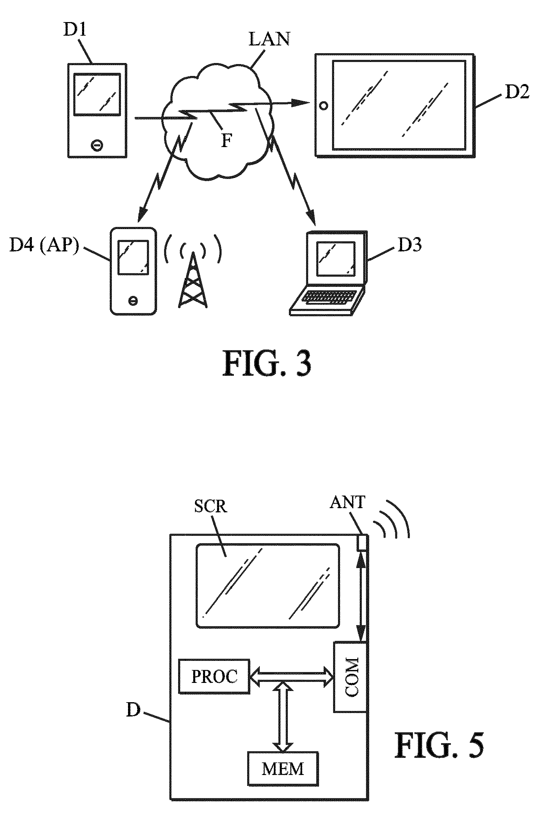

In a particular embodiment described hereafter with reference to figure 3, the network is a local area network (LAN).

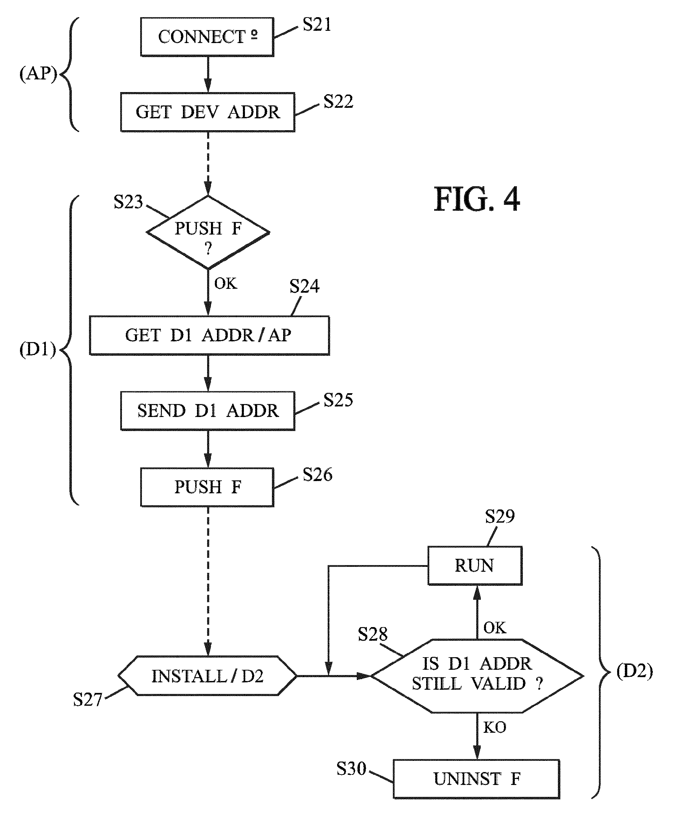

A group of terminal devices D1, D2, D3, ..., D4 (called a "Sharing Group", e.g. sharing a same application provided by device D1) is connected to a local network LAN. Such devices can use for example a WiFi direct connection or a WiFi Hotspot connection for instant sharing. In the example of figure 4, one of the devices D4 acts as the access point AP for enabling an ad-hoc local area network LAN.

With reference now to figure 4, the first step S21 is the creation of the network LAN thanks to the access point AP. The access point AP provides the other devices D1-D3 with the right information so as to connect to the network through the access point (for example an identifier SSID and a password PWD). The access point establishes thus the network LAN so that the devices D1, D2, D3, D4 can be connected together at step S21 and the sharing group with devices D1 to D4 is then created.

In the next step S22, the access point AP establishes a table of the MAC addresses of the devices D1-D4 over the network LAN.

When one of the devices D1 (which can provide the application F, as a "first device" according to the wording of the description of the invention given above) is requested from at least the second device D2 to send data of the application at step S23, the first device D1 obtains first its address from the access point at step S24, and transmits that address (step S25) and data of the application (step S26) to the second device D2. In a possible embodiment, the application can be pushed to the three other devices of figure 4: D2, D3 and D4, and the three devices can install thus the application.

In a variant embodiment, the second device D2 can obtain the address of the first device D1 directly from the access point AP.

In step S27, the second device D2 install thus the application pushed from the first device D1. Before running the application, the second device D2 checks with the access point AP whether the address of the first device D1 is still valid (e.g. still listed in the table of addresses that the access point provides), in step S28, which means that the first device D1 is still connected indeed to the network LAN. As long as the first device D1 is connected (arrow OK at the output of test S28), the second device D2 can run the application at step S29. Otherwise (arrow KO at the output of test S28), the application is uninstalled from the second device D2 at step S30.

Therefore, the usage of the application on any connected device D2 to D4 is possible as long as the first device D1 is connected to the sharing group. Before the run of the application, the operating system (OS) of devices D2, and/or D3, and/or D4, checks whether the first device D1 is still connected to the sharing group (e.g. to the network LAN). In the embodiment above, a table of the MAC addresses (and/or possibly of the IP addresses as well) of the connected devices can be established and maintained at the access point and can be synchronized with each device connection or disconnection to/from the sharing group. When the application is received from device D1 and installed on devices D2-D4, their operating system memorizes the MAC address of device D1. As soon as device D1 leaves the sharing group, the application cannot run anymore on devices D2-D4, because the MAC address of device D1 cannot be found anymore in the maintained table of devices connected to the sharing group.

The disablement of the application can occur then:
- when the first device D1 (pusher) leaves the sharing group, and
- when one of the devices D2-D4 tries to run the application.

In that case, the users of devices D2-D4 have the choice to buy the application from the application market. The disablement of the application can lead to:
- an uninstallation of the application (the application being then reinstalled when the user has bought it from the application market), or
- a blocking of the application (the application being de-blocked again when the user has bought the right to use it from the application market).

The second option above is less time consuming (since it does not need an uninstallation and reinstallation of the application) whereas the first option is safer.

Of course, the invention can be performed by a device according to the invention, and especially programmed to perform the steps described above in an example of embodiment, such a device (typically the aforesaid second device D2) comprising, with reference to figure 5:
- processing means such as a processor PROC for example (or a DSP in a variant),
- communication means (for example a communication interface COM driving an antenna for radiofrequency communications),
- and a working memory MEM, for storing at least received data of contents or applications received from other connected devices.

The present invention can also be embedded in a computer program product, which comprises all the features enabling the implementation of the method described herein, and which, when loaded in an information processing system (for example in a user device), causes the information processing system to perform the method of the invention. Computer program means or computer program in the present context mean any expression, in any language, code or notation, of a set of instructions intended to cause a system having an information processing capability to perform a particular function either directly or after the conversion to another language. Such a computer program can be stored on a computer or machine readable medium allowing data, instructions, messages or message packets, and other machine readable information to be read from the medium. The computer or machine readable medium may include non-volatile memory, such as ROM, Flash memory, Disk drive memory, CD-ROM, and other permanent storage. Additionally, a computer or machine readable medium may include, for example, volatile storage such as RAM, buffers, cache memory, and network circuits. Furthermore, the computer or machine readable medium may comprise computer or machine readable information in a transitory state medium such as a network link and/or a network interface, including a wired network or a wireless network, that allow a device to read such computer or machine readable information.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention include all embodiments falling within the scope of the invention as broadly defined above.

A person skilled in the art will readily appreciate that various parameters disclosed in the description may be modified and that various embodiments disclosed and/or claimed may be combined without departing from the scope of the invention.

## Claims

1. A method for controlling the use of data received from a first device, said method being implemented by computing means of a second device connected to said first device via a network, wherein the method comprises the steps:
- obtaining connection data of said first device, said connection data giving an information as to whether said first device is still connected or disconnected from the network,
- on the basis of said connection data, detecting whether said first device is still connected or disconnected to the second device via the network, and
- if said first device is detected as being disconnected from the network, then said data are prevented from being used on said second device.

2. The method of claim 1, wherein, said second device comprising a memory for storing said data at least temporarily, if said first device is detected as being disconnected from the network, then said data are deleted from said memory of said second device.

3. The method according to any of the claims 1 and 2, wherein said connection data comprise at least an address of said first device over the network.

4. The method according to any of the claims 1 to 3, wherein said network is a local wireless network.

5. The method of claim 4, wherein said connection data are obtained from a device connected to the network and acting as an access point to said local network.

6. The method of claim 5, wherein said first device is the access point to said local network and wherein said connection data are received from said first device.

7. The method according to any of claims 1 to 6, wherein said data comprise data of an application, said application being installed on said second device upon reception of said data on said second device, and wherein a detection of disconnection of said first device from the network causes an uninstallation of said application from the second device.

8. The method of claim 7, wherein said second device runs an operating system arranged for uninstalling said application from the second device upon detection of disconnection of said first device from the network.

9. The method according to any of claims 1 to 6, wherein said data comprise data of an application, said application being installed on said second device upon reception of said data on said second device, and wherein a detection of disconnection of said first device from the network causes a blockage of run of said application on the second device.

10. The method according to any of claims 2 to 6, wherein said data comprise data of a content, said content being stored in said memory of said second device upon reception of said data on said second device, and wherein a detection of disconnection of said first device from the network causes a deletion of said data of said content from said memory.

11. The method according to any of claims 1 to 10, wherein, if a communication session between said first and second devices is changed, then said data are prevented from being used on said second device.

12. A device, comprising communication means for receiving data from a distant device via a network, and further comprising processing means for, upon detection of disconnection of said distant device from the network, preventing said data from being used on said device.

13. A computer program product, comprising instructions for performing the method according to anyone of claims 1 to 11, when run by processing means.
